# EUROPEAN PATENT APPLICATION

(11) **EP 4 287 623 A1**
(43) Date of publication of application: **06.12.2023**
(21) Application number: 21924260.9
(22) Date of filing: 26.10.2021
(51) Int. Cl.: H04N 21/2187, H04N 21/25, H04N 21/472

(54) **VEHICLE-MOUNTED LIVE STREAMING METHOD AND APPARATUS**

(30) Priority: 04.02.2021 CN 202110156289
(71) Applicant: Huawei Technologies Co., Ltd., Shenzhen, Guangdong 518129 (CN)
(72) Inventor: DUAN, Shaohua, Shenzhen, Guangdong 518129 (CN); JIN, Xinyao, Shenzhen, Guangdong 518129 (CN); XIE, Pinghui, Shenzhen, Guangdong 518129 (CN)
(74) Representative: Thun, Clemens
(86) International application number: PCT/CN2021/126289
(87) International publication number: WO 2022/166263

(57) **Abstract**

An in-vehicle livestream method and an apparatus are provided, used to intelligently switch a livestream angle of view. In this application, the server receives at least one first video stream from a first terminal device, where the first video stream is obtained by collecting a live video in any direction outside a first vehicle, and the server processes the at least one first video stream to obtain a panoramic video stream. By using this method, the server obtains the panoramic video stream after processing the at least one first video stream from a first terminal device on a livestream side, so as to provide a video stream at any angle of view for a second terminal device on a viewer side, and a user of the terminal device on the viewer side can see a live video in any direction outside the first vehicle. This helps to realize intelligent switching of the livestream angle of view.

## Description

### CROSS-REFERENCE TO RELATED APPLICATIONS

This application claims priority to Chinese Patent Application No. 202110156289.6, filed with the China National Intellectual Property Administration on February 4, 2021 and entitled "IN-VEHICLE LIVESTREAM METHOD AND APPARATUS", which is incorporated herein by reference in its entirety.

### TECHNICAL FIELD

This application relates to the field of intelligent vehicle technologies, and in particular, to an in-vehicle livestream method and an apparatus.

### BACKGROUND

In recent years, with the popularity of the livestream technology in the mobile Internet, now everyone can release audio and video works as an information producer and present them to users through rich real scenarios and content, so as to attract traffic and fans to meet user resource and economic benefit requirements.

The mobile livestream technology is implemented mainly through a mobile client and depends on a specific video livestream platform. As a mobile terminal of the Internet, an intelligent vehicle provides a video livestream function for a user, so as to enrich mobile livestream technologies. Currently, a video livestream service is provided for the user by using an event data recorder or a mobile phone installed inside the vehicle. However, this manner of adding an additional device for livestreaming is limited by a fixed location of a camera, and the camera faces a fixed direction. For example, if the camera faces the front of the vehicle, the user can only see a live video facing the front of the vehicle. In addition, it is inconvenient to switch a livestream angle of view provided in this livestream manner. In a driving process of the vehicle, an interesting scenery may appear in another direction other than the fixed direction. If a live streamer wants to switch the livestream angle of view for the user to view the interesting scenery, the live streamer can only manually control the camera to switch the angle of view, which compromises user experience.

### SUMMARY

This application provides an in-vehicle livestream method and an apparatus, used to intelligently switch a livestream angle of view.

According to a first aspect, an embodiment of this application provides an in-vehicle livestream method. The method includes: A server receives at least one first video stream from a first terminal device, where the first video stream is obtained by collecting a live video in any direction outside a first vehicle, and the server processes the at least one first video stream to obtain a panoramic video stream.

By using this method, the server obtains the panoramic video stream after processing the at least one first video stream from a first terminal device on a livestream side, so as to provide a video stream at any angle of view for a second terminal device on a viewer side, and a user of the terminal device on the viewer side can see a live video in any direction outside the first vehicle. This helps to realize intelligent switching of the livestream angle of view.

In a possible implementation, the method further includes: The server receives first request information from a second terminal device, where the first request information is used to request the live video outside the first vehicle; the server obtains, based on the first request information, a video stream corresponding to a target viewing angle in the panoramic video stream; and the server sends the video stream corresponding to the target viewing angle to the second terminal device. Therefore, the server may recommend, based on the first request information of the second terminal device on the viewer side, the video stream corresponding to the target viewing angle to the second terminal device on the viewer side.

In a possible implementation, the first request information includes first indication information, and the first indication information is used to indicate the server to determine, based on content of the live video, a video stream corresponding to a first viewing angle. In this way, the second terminal device on the viewer side may instruct, in a user instruction manner, the server to intelligently recommend a viewing angle to the viewer side, and provide a corresponding video stream.

In a possible implementation, that the server obtains, based on the first request information, a video stream corresponding to a target viewing angle in the panoramic video stream includes: The server performs frame extraction on a video stream of each preset angle of view in the panoramic video stream based on the first indication information, to obtain at least one frame of picture corresponding to the preset angle of view; the server matches content of the at least one frame of picture with content of a reference picture stored in the server, to determine a user recognition degree corresponding to a preset angle of view that matches the content of the reference picture, where the content included in the reference picture is content with a user recognition degree greater than a first threshold; the server determines the first viewing angle based on the user recognition degree corresponding to the preset angle of view that matches the content of the reference picture; and the server obtains the video stream corresponding to the first viewing angle in the panoramic video stream. In this way, the server may intelligently recommend, to the viewer side with reference to the content with the user recognition degree greater than the first threshold, a video stream of a viewing angle with a high user recognition degree.

In a possible implementation, the method further includes: The server obtains user preference data, where the user preference data includes content of a video stream with a user recognition degree greater than a second threshold and a category of content of each video stream.

In a possible implementation, that the server obtains, based on the first request information, a video stream corresponding to a target viewing angle in the panoramic video stream includes: The server classifies, based on the first request information, a video stream of each preset angle of view in the panoramic video stream, to obtain a category of content of the video stream of each preset angle of view; the server determines a user recognition degree of the video stream of each preset angle of view based on the user preference data and the category of the content of the video stream of each preset angle of view; the server determines the first viewing angle based on the user recognition degree of the video stream of each preset angle of view; and the server obtains the video stream corresponding to the first viewing angle in the panoramic video stream. In this way, the server may intelligently recommend, to the viewer side with reference to the user preference data, a video stream of a viewing angle with a high user recognition degree.

In a possible implementation, the method further includes: The server receives a second video stream from the first terminal device, where the second video stream is obtained by collecting a live video of a first live streamer.

In a possible implementation, the method includes: The server determines, based on the second video stream, a posture feature of the first live streamer and a feature keyword in audio, where the posture feature includes an expression and/or a body movement; that the server obtains, based on the first request information, a video stream corresponding to a target viewing angle in the panoramic video stream specifically includes: The server determines, from the panoramic video stream based on the first request information, a viewing angle corresponding to the posture feature of the first live streamer and the feature keyword in the audio as the first viewing angle; and the server obtains the video stream corresponding to the first viewing angle in the panoramic video stream. In this way, the server may intelligently recommend, to the viewer side with reference to the posture feature of the live streamer and the feature keyword in the audio, a video stream of a viewing angle in which the live streamer is interested.

In a possible implementation, the method further includes: The server obtains current environment information, where the current environment information includes at least one of the following: current location information of the first vehicle, current weather information of a location of the first vehicle, and information about a point of interest POI within a preset range from the location of the first vehicle; and that the server obtains, based on the first request information, a video stream corresponding to a target viewing angle in the panoramic video stream specifically includes: The server determines, from the panoramic video stream based on the first request information, a viewing angle related to the current environment information as the first viewing angle; and the server obtains the video stream corresponding to the first viewing angle in the panoramic video stream. In this way, the server may intelligently recommend, to the viewer side with reference to the current environment information, a video stream of a viewing angle that is preferred by the public, for example, a scenic spot or a natural landscape.

In a possible implementation, the first request information includes second indication information, the second indication information is used to indicate a second viewing angle, and the second viewing angle is used to indicate the server to deliver a video stream based on the second viewing angle. In this way, the viewer side may select a specified viewing angle according to a preference of the viewer side, to indicate the server to deliver a video stream corresponding to the specified viewing angle.

In a possible implementation, that the server obtains, based on the first request information, a video stream corresponding to a target viewing angle in the panoramic video stream includes: The server obtains, based on the first request information, a video stream corresponding to the second viewing angle in the panoramic video stream; and that the server sends the video stream corresponding to the target viewing angle to the second terminal device includes: The server sends the video stream corresponding to the second viewing angle to the second terminal device. Therefore, the server may deliver, based on an instruction of the viewer side, the video stream that is of the specified viewing angle and that is selected by the user.

In a possible implementation, the method further includes: The server receives second request information sent by the second terminal device, where the second request information is used to request to switch a current viewing angle to a third viewing angle; and the server sends a video stream corresponding to the third viewing angle to the second terminal device. The current viewing angle may be the first viewing angle or the second viewing angle. In this way, when receiving an instruction from the viewer side to switch the viewing angle, the server may further provide a video stream of a switched viewing angle for the viewer side.

In a possible implementation, the method further includes: The server sends the second video stream to the second terminal device. In this way, in addition to viewing the live video outside the vehicle, the viewer side may further see the live video of the live streamer.

In a possible implementation, the method includes: The server receives a third video stream from the first terminal device, where the third video stream is obtained by collecting a live video of a second live streamer. In this way, the first terminal device on the livestream side may change the live streamer. Correspondingly, the server may receive a live video of a changed live streamer, so as to provide the live video of the changed second live streamer for the viewer side.

According to a second aspect, an embodiment of this application provides an in-vehicle livestream method. The method includes: A first terminal device receives a first instruction, where the first instruction is used to instruct to start video livestream; the first terminal device enables a video livestream function based on the first instruction; the first terminal device obtains live videos in all directions outside a first vehicle, to obtain at least one first video stream; and the first terminal device sends the at least one first video stream to a server.

According to the method, a terminal device on a live streamer side may obtain the live video outside the first vehicle, and upload the live video to the server, so that the server can provide a video stream of a target viewing angle for a terminal device on a viewer side.

In a possible implementation, after the first terminal device enables the video livestream function based on the first instruction, the method further includes: The first terminal device obtains a live video of a first live streamer to obtain a second video stream; and the first terminal device sends the second video stream to the server. In this way, the terminal device on the live streamer side may not only upload the live video outside the vehicle to the server, but also upload the live video of the first live streamer to the server, so that the server may not only provide the live video outside the vehicle for the viewer side, but also provide the live video of the first live streamer for the viewer side.

In a possible implementation, after the first terminal device collects, by using a second video collection apparatus, the live video of the first live streamer, to obtain the second video stream, the method further includes: The first terminal device receives a second instruction, where the second instruction is used to instruct a livestream lens to switch from the first live streamer to a second live streamer; the first terminal device adjusts the livestream lens to face the second live streamer, and collects a live video of the second live streamer, to obtain a third video stream; and the first terminal device sends the third video stream to the server. In this way, in a livestream process of the first live streamer, the livestream lens may be switched to change a live streamer, and a live video of the changed live streamer is uploaded to the server.

According to a third aspect, an embodiment of this application provides an in-vehicle livestream method, including: A second terminal device receives a third instruction, where the third instruction is used to instruct to obtain a live video of a first vehicle; the second terminal device sends first request information to a server, where the first request information is used to request the live video of the first vehicle; and the second terminal device receives, from the server, a video stream corresponding to a target viewing angle.

According to the method, the second terminal device on a viewer side may send a request to the server, to obtain the video stream that is corresponding to the target viewing angle and that is delivered by the server, so that a viewer can see the live video of the first vehicle corresponding to the target viewing angle.

In a possible implementation, the first request information includes first indication information, and the first indication information is used to indicate the server to determine, based on content of the live video, a video stream corresponding to a first viewing angle; and that the second terminal device receives, from the server, a video stream corresponding to a target viewing angle includes: The second terminal device receives, from the server, the video stream corresponding to the first viewing angle. Therefore, the viewer side may indicate the server to determine a video stream corresponding to a viewing angle, so as to obtain a video stream of a viewing angle recommended by the server.

In a possible implementation, the first request information includes second indication information, the second indication information is used to indicate a second viewing angle, and the second viewing angle is used to indicate the server to deliver a video stream based on the second viewing angle; and the second terminal device receives, from the server, a video stream corresponding to a target viewing angle includes: The second terminal device receives, from the server, a video stream corresponding to the second viewing angle. In this way, the viewer side may specify, based on a preference of the viewer side, a second viewing angle, to obtain a video stream that is corresponding to the second viewing angle specified by the viewer and that is delivered by the server.

In a possible implementation, the method further includes: The second terminal device sends user preference data to the server, where the user preference data includes video stream viewing data of a user of the second terminal device.

In a possible implementation, the method further includes: The second terminal device sends second request information to the server, where the second request information is used to request to switch a current viewing angle to a third viewing angle; and that the second terminal device receives, from the server, a video stream corresponding to a target viewing angle includes: The second terminal device receives a video stream that is corresponding to the third viewing angle and that is sent by the server. The current viewing angle may be the first viewing angle or the second viewing angle. In this way, the viewer side may freely switch a viewing angle in a process of viewing the live video outside the vehicle, so as to obtain, from the server, a video stream of a switched viewing angle indicated by the viewer.

In a possible implementation, the method further includes: The second terminal device receives a second video stream sent by the server, where the second video stream is obtained by collecting a live video of a first live streamer; and the second terminal device displays a floating window, where the floating window is used to display the second video stream. In this way, a user on the viewer side may not only view the live video outside the vehicle on the second terminal device, but also view the live video of the live streamer.

Corresponding to any in-vehicle livestream method in the first aspect to the third aspect, this application further provides a communications apparatus. The communications apparatus may be any transmitting device or receiving device that performs data transmission in a wireless manner, for example, a first terminal device, a second terminal device, or a server. In a communications process, the transmitting device and the receiving device are opposite to each other. In some communications processes, the communications apparatus may be used as the first terminal device or a communications chip that can be used for the first terminal device. In some communications processes, the communications apparatus may be used as the second terminal device or a communications chip that can be used for the second terminal device. In some communications processes, the communications apparatus may be used as the server or a communications chip that can be used for the server.

According to a fourth aspect, a communications apparatus is provided. The communications apparatus includes a communications unit and a processing unit, to perform any implementation of any in-vehicle livestream method according to the first aspect to the third aspect. The communications unit is configured to perform functions related to sending and receiving. Optionally, the communications unit includes a receiving unit and a sending unit. In a design, the communications apparatus is a communications chip, and the communications unit may be an input/output circuit or a port of the communications chip.

In another design, the communications unit may be a transmitter and a receiver, or the communications unit may be a transmitter machine and a receiver machine.

Optionally, the communications apparatus further includes modules that may be configured to perform any implementation of any in-vehicle livestream method according to the first aspect to the third aspect.

According to a fifth aspect, a communications apparatus is provided. The communications apparatus is the foregoing server, and includes a processor and a memory. Optionally, the communications apparatus further includes a transceiver. The memory is configured to store a computer program or instructions. The processor is configured to invoke the computer program or the instruction from the memory and run the computer program or the instruction. When the processor executes the computer program or the instruction in the memory, the communications apparatus is enabled to perform any implementation of any in-vehicle livestream method according to the first aspect to the third aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

According to a sixth aspect, a communications apparatus is provided. The communications apparatus includes a processor. The processor is coupled to a memory, and may be configured to perform the method according to any one of the first aspect to the third aspect, and any one of the possible implementations of the first aspect to the third aspect. Optionally, the communications apparatus further includes a memory. Optionally, the communications apparatus further includes a communications interface coupled to the processor.

In an implementation, the communications apparatus is a terminal device end. When the communications apparatus is a first terminal device, the communications interface may be a transceiver or an input/output interface. Optionally, the transceiver may be a transceiver circuit. Optionally, the input/output interface may be an input/output circuit.

In another implementation, the communications apparatus is a server. When the communications apparatus is the server, the communications interface may be a transceiver or an input/output interface. Optionally, the transceiver may be a transceiver circuit. Optionally, the input/output interface may be an input/output circuit.

In still another implementation, the communications apparatus is a chip or a chip system. When the communications apparatus is the chip or the chip system, the communications interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a communications system is provided. The system includes at least two of the foregoing first terminal device end, a second terminal device, and a server.

According to an eighth aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect to the third aspect.

According to a ninth aspect, a computer-readable storage medium is provided. The computer-readable storage medium stores a computer program (which may also be referred to as code or instructions). When the computer program is run on a computer, the computer is enabled to perform the method according to any possible implementation of the foregoing first aspect, or perform the method according to any implementation of the first aspect to the third aspect.

According to a tenth aspect, a chip system is provided. The chip system may include a processor. The processor is coupled to a memory, and may be configured to perform the method according to any one of the first aspect to the third aspect, and any one of the possible implementations of the first aspect to the third aspect. Optionally, the chip system further includes a memory. The memory is configured to store a computer program (which may also be referred to as code or instructions). The processor is configured to invoke the computer program from the memory and run the computer program, so that a device on which a chip system is installed performs the method according to any one of the first aspect to the third aspect and any one of the possible implementations of the first aspect to the third aspect.

In a specific implementation process, the foregoing processing apparatus may be a chip, an input circuit may be an input pin, an output circuit may be an output pin, and a processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

### BRIEF DESCRIPTION OF DRAWINGS

FIG. 1 is a schematic diagram of a possible architecture of a communications system to which an embodiment of this application is applicable;
FIG. 2 is a schematic diagram of a structure of a vehicle to which an embodiment of this application is applicable;
FIG. 3 is a schematic diagram of a three-dimensional panoramic live video model according to an embodiment of this application;
FIG. 4 is a schematic flowchart of an in-vehicle livestream method according to an embodiment of this application;
FIG. 5 is a schematic diagram of a communications apparatus according to an embodiment of this application;
FIG. 6 is a schematic diagram of a communications apparatus according to an embodiment of this application; and
FIG. 7 is a schematic diagram of a communications apparatus according to an embodiment of this application.

### DESCRIPTION OF EMBODIMENTS

This application will be further described in detail below with reference to the accompanying drawings. It is clear that the described embodiments are a part rather than all of embodiments of this application. A specific operation method in the method embodiment may also be applied to an apparatus embodiment. In descriptions of embodiments of this application, a person of ordinary skill in the art may understand that various reference numerals such as "first" and "second" in this application are merely used for differentiation for ease of description, and are not used to limit the scope of embodiments of this application, or represent a sequence. "A plurality of" means two or more. The term "and/or" describes an association relationship between associated objects and indicates that three relationships may exist. For example, A and/or B may indicate the following cases: Only A exists, both A and B exist, and only B exists. A character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces).

The following clearly and completely describes the technical solutions in embodiments of this application with reference to the accompanying drawings in embodiments of this application.

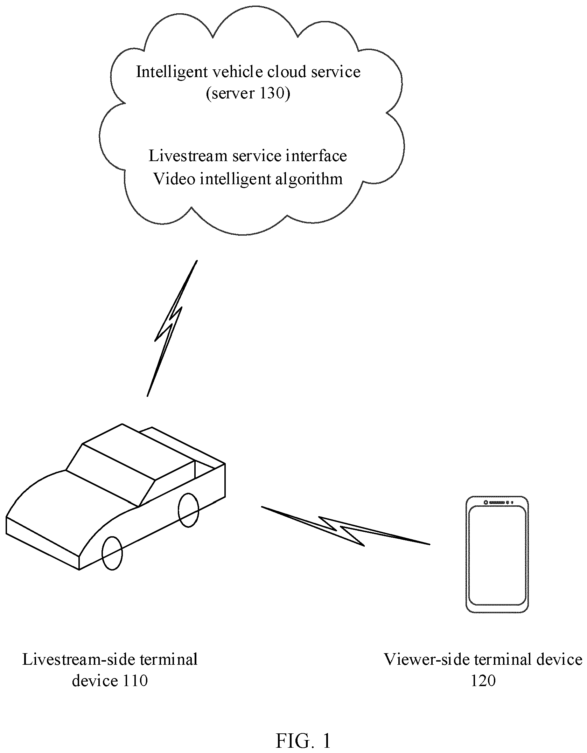

FIG. 1 is a schematic diagram of a possible architecture of a communications system to which an embodiment of this application is applicable. The communications system may include a terminal device and an intelligent vehicle cloud service platform. As shown in FIG. 1, the terminal device includes at least one livestream-side terminal device. In FIG. 1, an example in which the livestream-side terminal device is a vehicle is used for illustration. FIG. 1 shows a vehicle 110 for example. The terminal device may further include at least one viewer-side terminal device. In FIG. 1, an example in which the viewer-side terminal device is a mobile phone is used for illustration. FIG. 1 shows a mobile phone 120 for example. The intelligent vehicle cloud service platform includes at least one server 130.

The livestream-side terminal device 110 is configured to: collect an original live video in real time, and upload the collected original live video to a server on the intelligent vehicle cloud service platform. For example, the original live video collected by the livestream-side terminal device may include not only a live video that is outside the vehicle and that is collected by using a camera apparatus, but also a live video that is collected by using the camera apparatus and that includes a live streamer.

The intelligent vehicle cloud service platform includes at least one server 130. The server 130 may be configured to: receive the original live video sent by the livestream-side terminal device, determine a target viewing angle in the original live video by using an artificial intelligence (artificial intelligence, AI) algorithm, and then deliver a video stream corresponding to the target viewing angle to the viewer-side terminal device by using a livestream service interface.

The viewer-side terminal device 120 is configured to receive and play a target live video.

In embodiments of this application, an example in which the livestream-side terminal device is a vehicle is used for illustration. Any vehicle in embodiments of this application may be an intelligent vehicle or a non-intelligent vehicle. This is not limited in embodiments of this application. A sensor is disposed on each vehicle, and the sensor is configured to collect an image near the vehicle. The sensor may be a camera. In addition, one or more types of sensors may be disposed on each vehicle, and there may be one or more sensors of each type. The sensor may be installed on a top of the vehicle (for example, may be disposed in a middle location on the top of the vehicle), a front end of the vehicle, a rear end of the vehicle, a left side of the vehicle, a right side of the vehicle, or the like. A location and a quantity of sensors installed in each vehicle are not limited in embodiments of this application.

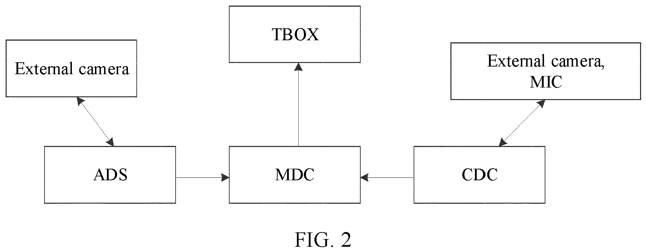

As shown in FIG. 2, components inside the vehicle in embodiments of this application may include an auto driving system (auto driving system, ADS), a mobile data center (mobile data center, MDC), a cockpit domain controller (cockpit domain controller, CDC), an in-vehicle telematics box (telematics box, TBOX), an external camera, an internal camera, and a microphone (MIC). The external camera may be disposed in four directions, namely, front, rear, left, and right. The internal camera may be disposed in a driving seat, or may be disposed in a passenger seat of the vehicle. This is not limited in embodiments of this application.

The vehicle may send, to the MDC by using the ADS system, audio and video (referred to as a first video stream in the following) that are outside the vehicle and that are collected by the external camera, or may send, to the MDC by using the CDC, audio and video (referred to as a second video stream in the following) that are inside the vehicle and that are collected by the internal camera in the vehicle. Then, the MDC uploads the collected first video stream and second video stream to the intelligent vehicle cloud service platform through a network channel provided by the TBOX. An intelligent vehicle cloud service provides a video splicing function and a panoramic live video. In addition, an AI algorithm of an intelligent vehicle cloud is used to provide an intelligent live video viewing angle, and the intelligent live video viewing angle is pushed to a livestream client.

In embodiments of this application, the vehicle may communicate with another object based on a vehicle to everything (vehicle to everything (V2X)) wireless communications technology. For example, communication between the vehicle and the viewer-side terminal device may be implemented based on an inter-vehicle wireless communications technology (for example, vehicle to vehicle (V2V)). The vehicle may communicate with the another object based on wireless fidelity (wireless fidelity (Wi-Fi)), a fifth generation (5th generation, 5G) mobile communications technology, or the like.

In embodiments of this application, the server may receive at least one first video stream sent by the livestream-side terminal device. The first video stream is obtained by collecting a live video in any direction outside a first vehicle. Then, the server processes the at least one first video stream to obtain a panoramic video stream, and may obtain a video stream corresponding to a target viewing angle in the panoramic video stream and send the video stream to the viewer-side terminal device, so that the video stream corresponding to the target viewing angle is intelligently provided for the viewer-side terminal device, thereby effectively improving user experience.

For ease of description, the livestream-side terminal device is referred to as a first terminal device, and the viewer-side terminal device is referred to as a second terminal device.

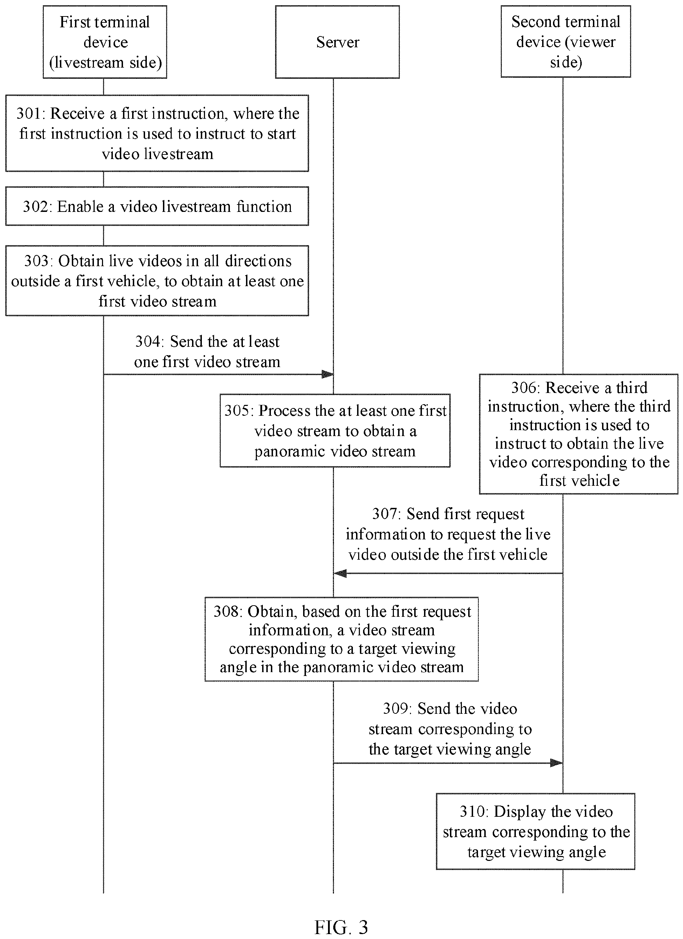

Based on the communications system shown in FIG. 1, the following describes an in-vehicle livestream method provided in an embodiment of this application. As shown in FIG. 3, the method includes the following steps.

Step 301: A first terminal device receives a first instruction, where the first instruction is used to instruct to start video livestream.

Optionally, the first instruction may be implemented in a plurality of manners. In a possible implementation, the first instruction may be a voice instruction, for example, may be a voice "start video livestream", or may be another voice. This is not limited herein. The first terminal device may receive the voice instruction by using a microphone inside a first vehicle, and start video livestream. In another possible implementation, the first instruction may be implemented by a key inside the first vehicle triggered by a live streamer. For example, the first terminal device receives a first operation, and generates the first instruction, where the first operation is a tap operation on the key inside the first vehicle.

Step 302: The first terminal device enables a video livestream function based on the first instruction.

In this embodiment of this application, when a first live streamer uses the video livestream function for the first time, based on an operation of the first live streamer, the first live streamer may register a user account of the first live streamer, log in to a livestream client, and create a livestream room. Then, when the first live streamer enables the video livestream function, the first live streamer may log in to the livestream client by using the user account of the first live streamer, and livestream outside the first vehicle where the first live streamer is located to a viewer.

Step 303: The first terminal device obtains live videos in all directions outside the first vehicle, to obtain at least one first video stream.

In this embodiment of this application, when enabling the video livestream function based on the first instruction, the first terminal device may turn on at least one first video collection apparatus, so as to collect the live videos in all directions outside the first vehicle.

In a possible implementation, a first video collection apparatus may be disposed outside the first vehicle. For example, the first video collection apparatus is a camera. A panoramic camera is disposed at a top central location outside the first vehicle. The panoramic camera may be used to collect video frame data in a 360-degree field of view in a horizontal direction outside the first vehicle and video frame data in a 180-degree field of view in a vertical direction, to obtain one channel of video frame data, that is, one first video stream.

In another possible implementation, a plurality of first video collection apparatuses may be disposed outside the first vehicle. For example, the first video collection apparatus is a camera. Cameras are separately disposed in four directions: front, rear, left, and right outside the first vehicle. A plurality of frames of images collected by each camera are encoded to obtain one video stream. In this way, a total of four first video streams in four directions: front, rear, left, and right may be obtained.

Step 304: The first terminal device sends the at least one first video stream to a server. Correspondingly, the server receives the at least one first video stream from the first terminal device.

Step 305: The server processes the at least one first video stream to obtain a panoramic video stream.

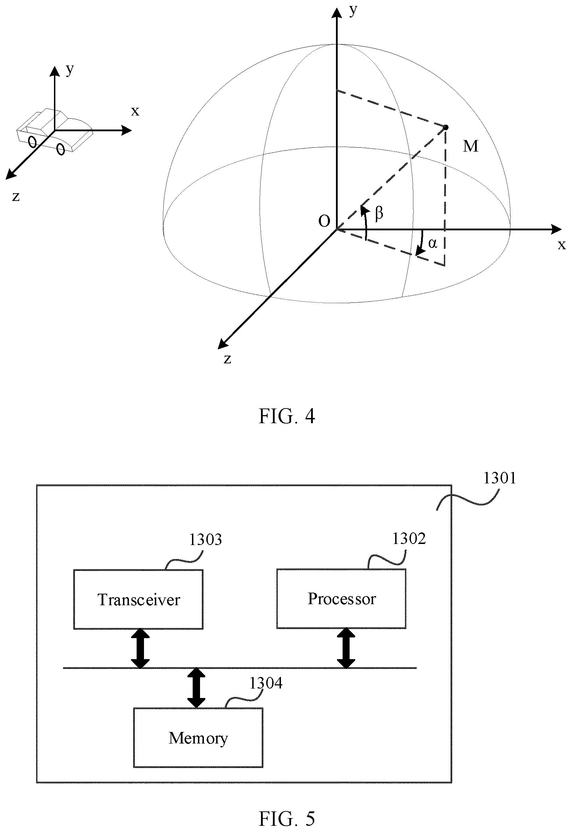

In an example, the server receives one first video stream. The server decodes video frame data in the first video stream to generate a panoramic video frame, and then processes the panoramic video frame in a 3D modeling manner to obtain one panoramic video stream. As shown in FIG. 4, a 3D coordinate system xyz is established with the first video collection apparatus on the first vehicle as an origin, a three-dimensional sphere model is created in the 3D coordinate system xyz, and the panoramic video frame is continuously projected to the three-dimensional sphere model in a preset time (for example, millisecond-level) order, so as to generate a three-dimensional panoramic live video model.

For example, it is simulated by using the three-dimensional panoramic live video model that a user of the second terminal device inside the first vehicle views surrounding scenery outside the first vehicle. For ease of description, the user of the second terminal device is referred to as a first user below. At the origin O, the first user may view a panoramic video on the three-dimensional panoramic live video model at any viewing angle. For example, as shown in FIG. 4, in the xyz coordinate system, a positive half axis direction of an x-axis correspondingly points directly in front of the first vehicle, a positive half axis direction of a z-axis correspondingly points to a right side of the first vehicle, and a positive half axis direction of a y-axis correspondingly points to a top direction of the first vehicle. The first user may view, at the origin O, a point M and a surrounding area of the point M on a three-dimensional sphere at a viewing angle of which a rotation degree is a and an elevation angle is β, where the rotation degree α is obtained by taking an xOy plane as a start point to rotate in the positive half axis direction of the z-axis, a value of α may be [0, 360°], the elevation angle β is obtained by taking an xOz plane as a start point to rotate in the positive half axis direction of the y-axis, a value of β may be [0, 180°], and one viewing angle may be uniquely determined when the rotation degree is α and the elevation angle is β. Herein, a size of the surrounding area of the point M depends on a size of a window for displaying a live video on the second terminal device.

In another example, the server receives a plurality of first video streams. The server decodes and splices the plurality of first video streams to generate a panoramic video frame, and processes the panoramic video frame in the 3D modeling manner to obtain one panoramic video stream.

Step 306: A second terminal device receives a third instruction, where the third instruction is used to instruct to obtain the live video of the first vehicle.

In this embodiment of this application, the second terminal device, as the viewer-side terminal device, may log in to a livestream client based on a series of operations of the user (referred to as the first user below) of the second terminal device by using a user account of the first user, find a livestream room corresponding to the first vehicle in the livestream client, and join the livestream room. The third instruction may be an instruction triggered when the first user enters the livestream room corresponding to the first vehicle. The third instruction may be triggered by a tap operation performed by the first user on a livestream control displayed on the second terminal device. The livestream control is a control used to enter the livestream room corresponding to the first vehicle, and the third instruction may also be a voice instruction.

In step 306, the third instruction may include a video livestream mode selected by the user, where the video livestream mode may be an intelligent angle of view mode, or may be a fixed angle of view mode. The following provides specific descriptions by using the following possible implementation a1 and possible implementation a2.

In the possible implementation a1, the video livestream mode that is selected by the user and that is included in the third instruction is the intelligent angle of view mode, and the second terminal device generates first indication information, where the first indication information is used to indicate the server to recommend a viewing angle and deliver a video stream corresponding to the recommended viewing angle.

In the possible implementation a2, the video livestream mode that is selected by the user and that is included in the third instruction is the fixed angle of view mode, and the second terminal device generates second indication information, where the second indication information includes a first viewing angle, and the second indication information is used to indicate the server to deliver a video stream corresponding to the first viewing angle.

Step 307: The second terminal device sends first request information to the server, where the first request information is used to request the live video outside the first vehicle. Correspondingly, the server receives the first request information from the second terminal device.

Based on the foregoing possible implementation a1, in step 307, the first request information may include the first indication information, used to indicate the server to determine, based on content of the live video, the video stream corresponding to the first viewing angle. Correspondingly, the server receives the first request information, and recommends a viewing angle, that is, the first viewing angle, to the user of the second terminal device based on the first indication information carried in the first request information. In this way, the server may intelligently recommend a viewing angle to the first user, or may intelligently switch a viewing angle for the first user in a livestream process.

Based on the foregoing possible implementation a2, in step 307, the first request information includes the second indication information, where the second indication information is used to indicate a second viewing angle, and the second viewing angle is used to indicate the server to deliver a video stream based on the second viewing angle. That is, the second terminal device may indicate the server to deliver a video stream corresponding to a fixed viewing angle, where the fixed viewing angle is the second viewing angle. Correspondingly, the server receives the first request information, and delivers the video stream of the second viewing angle to the second terminal device based on the second indication information carried in the first request information. In this way, the first user may select a viewing angle according to a preference of the first user.

Step 308: The server obtains, based on the first request information, a video stream corresponding to a target viewing angle in the panoramic video stream.

In this embodiment of this application, there are a plurality of manners in which step 308 may be implemented. The following provides descriptions by using the following possible implementation b 1, possible implementation b2, possible implementation b3, possible implementation b4, and possible implementation b5.

In the possible implementation b 1, based on the foregoing possible implementation a1, that the server obtains, based on the first request information, a video stream corresponding to a target viewing angle in the panoramic video stream includes: The server performs frame extraction on a video stream of each preset angle of view in the panoramic video stream based on the first indication information, to obtain at least one frame of picture corresponding to the preset angle of view, and then matches content of the at least one frame of picture with content of a reference picture stored in the server, to determine a user recognition degree corresponding to a preset angle of view that matches the content of the reference picture, where the content included in the reference picture is content with a user recognition degree greater than a first threshold, and the server determines the first viewing angle based on the user recognition degree corresponding to the preset angle of view that matches the content of the reference picture, and obtains the video stream corresponding to the first viewing angle in the panoramic video stream.

During specific implementation, whether the at least one frame of picture corresponding to each preset angle of view matches the content of the reference picture may be determined by determining whether a matching degree between the at least one frame of picture corresponding to each preset angle of view and the content of the reference picture is greater than a specific threshold. The threshold herein may be set according to an actual requirement, for example, set to 90%, or set to 98%. This is not limited herein.

For example, the server stores a plurality of reference pictures, and content of each reference picture is also corresponding to one user recognition degree. For a video stream of one viewing angle, at least one frame of picture corresponding to the viewing angle may match one reference picture, or may match a plurality of reference pictures. A larger quantity of matched reference pictures indicates a higher user recognition degree corresponding to the viewing angle.

In the implementation b 1, the first viewing angle may be a viewing angle with a highest user recognition degree, or may be one of n viewing angles with highest user recognition degrees.

In the possible implementation b2, based on the foregoing possible implementation a1, the server may obtain user preference data, where the user preference data includes content of a video stream with a user recognition degree greater than a second threshold and a category of content of each video stream. That the server obtains, based on the first request information, a video stream corresponding to a target viewing angle in the panoramic video stream specifically includes: The server classifies, based on the first request information, a video stream of each preset angle of view in the panoramic video stream, to obtain a category of content of the video stream of each preset angle of view, the server determines a user recognition degree of the video stream of each preset angle of view based on the user preference data and the category of the content of the video stream of each preset angle of view, the server determines the first viewing angle based on the user recognition degree of the video stream of each preset angle of view, and then obtains the video stream corresponding to the first viewing angle in the panoramic video stream.

In an example, the second terminal device sends user preference data to the server, where the user preference data may include user recognition degrees of the first user on categories of content of video streams that has been viewed.

In another example, another viewer-side terminal device other than the second terminal device sends user preference data to the server. The user preference data may also be user recognition degrees of a user (referred to as a second user below) of the another viewer-side terminal device on categories of content of video streams that has been viewed.

In still another example, the user preference data may also be user recognition degrees of the first user and at least one second user on categories of content of video streams that has been viewed.

In the possible implementation b3, the server receives a second video stream from the first terminal device, where the second video stream is obtained by collecting a live video of the first live streamer, and the server determines, based on the second video stream, a posture feature of the first live streamer and a feature keyword in audio, where the posture feature includes an expression and/or a body movement. That the server obtains, based on the first request information, a video stream corresponding to a target viewing angle in the panoramic video stream specifically includes: The server determines, from the panoramic video stream based on the first request information, a viewing angle corresponding to the posture feature of the first live streamer and the feature keyword in the audio as the first viewing angle, and then the server obtains the video stream corresponding to the first viewing angle in the panoramic video stream.

For example, when the first live streamer says: "Look at the hill on the right" in a livestream process, the server may identify feature keywords "look right" in audio of the first live streamer. The server may determine, with reference to the feature keywords "look right" in the audio, a viewing angle indicated by the first live streamer. Refer to an xyz coordinate system shown in FIG. 4, a viewing angle corresponding to the right side of the first vehicle is: a rotation degree of 90° and an elevation angle of 0°. The server may determine that the viewing angle indicated by the first live streamer is the rotation degree of 90° and the elevation angle of 0°, that is, it is determined that the first viewing angle is the rotation degree of 90° and the elevation angle of 0°.

For example, in a livestream process of the first live streamer, a finger of the first live streamer points to a direction with an included angle of 30 degrees directly in front of the first vehicle and says: "Wow, the leaves of the tree are really beautiful". The server may identify feature keywords "the tree" in audio of the first live streamer, and the posture feature of the first live streamer is: the finger points to the direction with an included angle of 30 degrees directly in front of the first vehicle. Refer to the xyz coordinate system shown in FIG. 4, a viewing angle corresponding to the direction with an included angle of 30 degrees directly in front of the first vehicle is a rotation degree of 30° and an elevation angle of 0°. The server may determine, with reference to the body movement of the first live streamer and the feature keywords in the audio, that the viewing angle is the rotation degree of 30° and the elevation angle of 0°, that is, it is determined that the first viewing angle is the rotation degree of 30° and the elevation angle of 0°.

In some other embodiments, in a livestream process inside the first vehicle, the first live streamer may further be switched to another live streamer for livestream. For example, the first terminal device may receive a second instruction, where the second instruction is used to instruct a livestream lens to switch from the first live streamer to a second live streamer; the first terminal device adjusts the livestream lens to face the second live streamer, and collects a live video of the second live streamer, to obtain a third video stream; and the first terminal device sends the third video stream to the server. The server receives the third video stream, and may send the third video stream to the second terminal device. The second instruction may be triggered by the first live streamer, or may be triggered by the second live streamer. A specific triggering manner may be key triggering, or may be voice triggering.

In the possible implementation b4, based on the foregoing possible implementation a1, the server may obtain current environment information, and that the server obtains, based on the first request information, a video stream corresponding to a target viewing angle in the panoramic video stream includes: The server determines, from the panoramic video stream based on the first request information, a viewing angle related to the current environment information as the first viewing angle, and the server obtains the video stream corresponding to the first viewing angle in the panoramic video stream.

The current environment information may include any one or more of the following items:
current location information of the first vehicle, current weather information of a location of the first vehicle, and information about a point of interest (point of interest, POI) within a preset range from the location of the first vehicle.

For example, the first terminal device may obtain the current weather information of the location of the first vehicle. For example, a current temperature is -5°C, there is an ice surface near the right side of the vehicle with an included angle of 45° from the front, and a viewing angle related to the ice surface is a rotation degree of 45° and an elevation angle 0°. The server determines that the first viewing angle is the rotation degree of 45° and the elevation angle of 0°.

For example, the first terminal device may obtain, from a high-precision map cloud service, POI information around the current location of the first vehicle, for example, an Internet celebrity tourism spot or a name of a landmark building. For example, there is an Internet celebrity tourism spot in a direction with an included angle of 90° between the right side and the front of the vehicle. The server determines that the first viewing angle is a rotation degree of 90° and an elevation angle of 0°.

In the possible implementation b5, that the server obtains, based on the first request information, a video stream corresponding to a target viewing angle in the panoramic video stream specifically includes: The server calculates, based on the first request information, a quantity of viewers corresponding to each viewing angle in the panoramic video stream, and determines a viewing angle with a largest quantity of viewers from the panoramic video stream as the first viewing angle, and the server obtains the video stream corresponding to the first viewing angle in the panoramic video stream.

In a possible implementation b6, the first viewing angle is determined based on a combination of any plurality of implementations in the foregoing implementations b1 to b5. For example, the server may determine the first viewing angle with reference to any plurality of factors of the content of the reference picture in the implementation b 1, the user preference data in the implementation b2, the viewing angle corresponding to the posture feature of the first live streamer and the feature keyword in the audio in the implementation b3, the current environment information in the implementation b4, and the quantity of viewers corresponding to each viewing angle in the implementation b5. For a specific manner, refer to the foregoing possible implementations b1 to b5. Details are not described herein again.

The following provides descriptions with reference to specific examples.

One viewing angle in the panoramic video stream is used as an example. Each viewing angle is scored based on a video stream of the viewing angle and the following data content items, and the first viewing angle is determined based on a final result of scoring each viewing angle. Refer to Table 1 below, Table 1 is a recommended scoring table for a viewing angle.

**Table 1**

| Data content item | Criterion of determining | Result of determining | Scoring rule | Score | Weight |
|---|---|---|---|---|---|
| Video frame extraction content | Whether a user likes a content | Yes | 1 to 10 points based on historical preference | S1 | P1 |
| | | No | 0 | | |
| Quantity of current Online viewers | Whether there is a viewer | Yes | Rank based on a quantity of online viewers with a full score of 10 points in a linear descending order | S2 | P2 |
| | | No | 0 | | |
| Directivity of a live streamer inside a vehicle | Whether there is clear directivity | Yes | 10 | S3 | P3 |
| | | No | 0 | | |
| Environment factor (like vehicle driving location information and weather information) | Whether there is an Internet celebrity tourism spot | Yes | 10 | S4 | P4 |
| | | No | 0 | | |
| | Historical score based on weather conditions, such as temperature, rain, and snow | Historical score | 1-10 | | |

As shown in Table 1, the data content item mainly includes the video frame extraction content, the quantity of current online viewers, the directivity of the live streamer inside the vehicle, the environmental factor, and the like. The video frame extraction content is used as an example for description. First, whether the user likes the content is determined based on the video frame extraction content. For a specific implementation, refer to the foregoing possible implementation b 1. If the result of determining is yes, the content may be scored based on a user preference degree with any score from 1 to 10. If the result of determining is no, the score is 0, a final score of this item is S1, and a weight of this item is set to P1. By analogy, a final score of the item of the quantity of current online viewers is S2, and a weight of this item is set to P2. A final score of the item of the directivity of the live streamer inside the vehicle is S3, and a weight of this item is set to P3. A final score of the item of the environment factor is S4, and a weight of this item is set to P4. The weight is optimized based on an internal algorithm.

Based on the foregoing scoring results, a priority score of each viewing angle is calculated as follows: S = S1 * P1 + S2 * P2 + S3 * P3 + S4 * P4. Viewing angles are ranked in descending order based on the priority score, and a viewing angle with a highest priority score is recommended to the user. For viewing angles with a same priority score, the viewing angles are continuously ranked based on a weight, if weights are still the same, the viewing angle is recommended based on an internal sequence.

In a possible implementation b7, based on the foregoing possible implementation a2, that the server obtains, based on the first request information, a video stream corresponding to a target viewing angle in the panoramic video stream specifically includes: The server obtains, based on the first request information, a video stream corresponding to the second viewing angle in the panoramic video stream.

Step 309: The server sends the video stream corresponding to the target viewing angle to the second terminal device.

Based on the foregoing possible implementations b1 to b6, that the server sends the video stream corresponding to the target viewing angle to the second terminal device in step 309 specifically includes: The server sends the video stream corresponding to the first viewing angle to the second terminal device. Correspondingly, the second terminal device receives the video stream corresponding to the first viewing angle from the server.

Based on the foregoing possible implementation b7, that the server sends the video stream corresponding to the target viewing angle to the second terminal device in step 309 specifically includes: The server sends the video stream corresponding to the second viewing angle to the second terminal device. Correspondingly, the second terminal device receives the video stream corresponding to the second viewing angle from the server.

Step 310: The second terminal device displays video content of the video stream corresponding to the target viewing angle.

Based on the foregoing possible implementations b1 to b6, in step 310, the second terminal device displays video content of the video stream corresponding to the first viewing angle.

Based on the foregoing possible implementation b7, in step 310, the second terminal device displays video content of the video stream corresponding to the second viewing angle.

In this embodiment of this application, when the user of the second terminal device selects the intelligent angle of view mode, the server may automatically calculate the target viewing angle, and recommend the target viewing angle to the user. When the user of the second terminal device selects the fixed angle of view mode, the server may send, to the second terminal device, a video stream of a viewing angle specified by the user.

In some other embodiments, the second video stream may further be sent to the second terminal device, and the second terminal device receives the second video stream from the server. The video content of the second video stream may be displayed through a floating window, or the video content of the second video stream may not be displayed, which will not affect the first user to view the video content of the first video stream, and can improve user experience.

In some other embodiments, the user of the second terminal device may switch a viewing angle in a process of viewing a livestream, so as to see video content that the user wants to see. For example, the user triggers a fourth instruction to instruct to switch a current viewing angle to the second viewing angle. The current viewing angle may be the first viewing angle or the second viewing angle. The second terminal device may receive the fourth instruction. In response to the fourth instruction, the second terminal device sends second request information to the server, where the second request information is used to request to switch the current viewing angle to a third viewing angle. The server sends a video stream corresponding to the third viewing angle to the second terminal device. Correspondingly, the second terminal device receives the video stream that is corresponding to the third viewing angle and that is sent by the server.

The terms "system" and "network" may be used interchangeably in embodiments of this application. "At least one" means one or more, and "a plurality of" means two or more. "and/or" describes an association relationship between associated objects, and represents that three relationships may exist. For example, A and/or B may represent the following cases: only A exists, both A and B exist, and only B exists, where A and B may be singular or plural. A character "/" generally indicates an "or" relationship between the associated objects. "At least one of the following items (pieces)" or a similar expression thereof refers to any combination of these items, including any combination of singular or plural items (pieces). For example, at least one of a, b, or c may indicate: a, b, c, a-b, a-c, b-c, or a-b-c, where a, b, and c may exist alone or in parallel.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects. For example, a first vehicle and a second vehicle are merely intended to distinguish between different vehicles, but do not indicate that the two vehicles have different priorities, different importance degrees, or the like.

It should be noted that, names of the foregoing messages are merely examples. With evolution of communications technologies, the name of any foregoing message may change. However, regardless of how the names of the messages change, provided that meanings of the messages are the same as those of the messages in this application, the messages fall within the protection scope of this application.

The foregoing mainly describes the solutions provided in this application from a perspective of interaction among network elements. It may be understood that, to implement the foregoing functions, each network element includes a corresponding hardware structure and/or software module for executing each function. A person of ordinary skill in the art should easily be aware that, in combination with the examples described in the embodiments disclosed in this specification, units and algorithm steps may be implemented by hardware or a combination of hardware and computer software in the present invention. Whether a function is performed by hardware or hardware driven by computer software depends on particular applications and design constraints of the technical solution. A person skilled in the art may use different methods to implement the described functions for each particular application, but it should not be considered that such implementation goes beyond the scope of the present invention.

According to the foregoing method, FIG. 5 is a schematic diagram of a structure of a communications apparatus according to an embodiment of this application. As shown in FIG. 5, the communications apparatus may be a first terminal device, a second terminal device, or a server. Alternatively, the communications apparatus may be a chip or a circuit, for example, a chip or a circuit that may be disposed in a map update apparatus at a terminal device end, or a chip or a circuit that may be disposed in a second map update apparatus.

Further, the communications apparatus 1301 may further include a bus system. A processor 1302, a memory 1304, and a transceiver 1303 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented through an integrated logical circuit of hardware in the processor 1302, or by using instructions in a form of software. The steps of the methods disclosed with reference to embodiments of this application may be directly performed and completed by a hardware processor, or may be performed and completed by using a combination of hardware and software modules in the processor 1302. The software module may be located in a mature storage medium in the art, for example, a random access memory, a flash memory, a read-only memory, a programmable read-only memory, an electrically erasable programmable memory, or a register. The storage medium is located in the memory 1304, and the processor 1302 reads information in the memory 1304 and completes the steps of the foregoing methods in combination with hardware of the processor 1302.

It should be noted that, the processor 1302 in embodiments of this application may be an integrated circuit chip, and has a signal processing capability. In an implementation process, steps in the foregoing method embodiments can be implemented by a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory 1304 in embodiments of this application may be a volatile memory or a nonvolatile memory, or may include both the volatile memory and the nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the system and method described in this specification includes but is not limited to these memories and any memory of another proper type.

When the communications apparatus 1301 is corresponding to the server in the foregoing method, the communications apparatus may include a processor 1302, a transceiver 1303, and a memory 1304. The memory 1304 is configured to store instructions. The processor 1302 is configured to execute the instructions stored in the memory 1304, to implement a related solution of the server in the method corresponding to any one or more of FIG. 3.

The transceiver 1303 is configured to receive at least one first video stream from a first terminal device, where the first video stream is obtained by collecting a live video in any direction outside a first vehicle; and
the processor 1302 is configured to process the at least one first video stream to obtain a panoramic video stream.

In a possible implementation, the transceiver 1303 is further configured to receive first request information from a second terminal device, where the first request information is used to request the live video outside the first vehicle; the processor 1302 is further configured to obtain, based on the first request information, a video stream corresponding to a target viewing angle in the panoramic video stream; and the transceiver 1303 is further configured to send the video stream corresponding to the target viewing angle to the second terminal device.

In a possible implementation, the first request information includes first indication information, and the first indication information is used to indicate the server to determine, based on content of the live video, a video stream corresponding to a first viewing angle.

In a possible implementation, the processor 1302 is configured to: perform, frame extraction on a video stream of each preset angle of view in the panoramic video stream based on the first indication information, to obtain at least one frame of picture corresponding to the preset angle of view; match content of the at least one frame of picture with content of a reference picture stored in the server, to determine a user recognition degree corresponding to a preset angle of view that matches the content of the reference picture, where the content included in the reference picture is content with a user recognition degree greater than a first threshold; and determine the first viewing angle based on the user recognition degree corresponding to the preset angle of view that matches the content of the reference picture; and the transceiver 1303 is further configured to obtain the video stream corresponding to the first viewing angle in the panoramic video stream.

In a possible implementation, the transceiver 1303 is further configured to obtain user preference data, where the user preference data includes content of a video stream with a user recognition degree greater than a second threshold and a category of content of each video stream.

In a possible implementation, the processor 1302 is configured to: classify, based on the first request information, a video stream of each preset angle of view in the panoramic video stream, to obtain a category of content of the video stream of each preset angle of view; determine a user recognition degree of the video stream of each preset angle of view based on the user preference data and the category of the content of the video stream of each preset angle of view; determine the first viewing angle based on the user recognition degree of the video stream of each preset angle of view; and obtain the video stream corresponding to the first viewing angle in the panoramic video stream.

In a possible implementation, the transceiver 1303 is configured to receive a second video stream from the first terminal device, where the second video stream is obtained by collecting a live video of a first live streamer.

In a possible implementation, the processor 1302 is further configured to: determine, based on the second video stream, a posture feature of the first live streamer and a feature keyword in audio, where the posture feature includes an expression and/or a body movement; and determine, from the panoramic video stream based on the first request information, a viewing angle corresponding to the posture feature of the first live streamer and the feature keyword in the audio as the first viewing angle; and
the server obtains the video stream corresponding to the first viewing angle in the panoramic video stream.

In a possible implementation, the processor 1302 is further configured to: obtain current environment information, where the current environment information includes at least one of the following: current location information of the first vehicle, current weather information of a location of the first vehicle, and information about a point of interest POI within a preset range from the location of the first vehicle; determine, from the panoramic video stream based on the first request information, a viewing angle related to the current environment information as the first viewing angle; and obtain the video stream corresponding to the first viewing angle in the panoramic video stream.

In a possible implementation, the first request information includes second indication information, the second indication information is used to indicate a second viewing angle, and the second viewing angle is used to indicate the server to deliver a video stream based on the second viewing angle.

In a possible implementation, the processor 1302 is configured to obtain, based on the first request information, a video stream corresponding to the second viewing angle in the panoramic video stream; and the transceiver 1303 is configured to send the video stream corresponding to the second viewing angle to the second terminal device.

In a possible implementation, the transceiver 1303 is configured to: receive second request information sent by the second terminal device, where the second request information is used to request to switch a current viewing angle to a third viewing angle; and send a video stream corresponding to the third viewing angle to the second terminal device.

In a possible implementation, the transceiver 1303 is configured to send the second video stream to the second terminal device.

In a possible implementation, the transceiver 1303 is further configured to receive a third video stream from the first terminal device, where the third video stream is obtained by collecting a live video of a second live streamer.

When the communications apparatus 1301 is the foregoing first terminal device, the transceiver 1303 is configured to: receive a first instruction, where the first instruction is used to instruct to start video livestream; the processor 1302 is configured to: enable a video livestream function based on the first instruction; and obtain live videos in all directions outside a first vehicle, to obtain at least one first video stream; and the transceiver 1303 is further configured to send the at least one first video stream to a server.

In a possible implementation, the processor 1302 is further configured to obtain a live video of a first live streamer to obtain a second video stream; and the transceiver 1303 is further configured to send the second video stream to the server.

In a possible implementation, the transceiver 1303 is further configured to receive a second instruction, where the second instruction is used to instruct a livestream lens to switch from the first live streamer to a second live streamer; the transceiver 1303 is further configured to: adjust the livestream lens to face the second live streamer, and collect a live video of the second live streamer, to obtain a third video stream; and the transceiver 1303 is further configured to send the third video stream to the server.

When the communications apparatus 1301 is the foregoing second terminal device, the processor 1302 is configured to: obtain first location information of a map element; and obtain first error information, where the first error information includes error information of positioning the first vehicle by using a positioning system of the first vehicle; and the transceiver 1303 is configured to send the first location information of the map element and the first error information to the second map update apparatus.

In a possible implementation, the transceiver 1303 is configured to: receive a third instruction, where the third instruction is used to instruct to obtain a live video of a first vehicle; send first request information to a server, where the first request information is used to request the live video of the first vehicle; and receive, from the server, a video stream corresponding to a target viewing angle.

In a possible implementation, the first request information includes first indication information, and the first indication information is used to indicate the server to determine, based on content of the live video, a video stream corresponding to a first viewing angle; and the transceiver 1303 is configured to receive, from the server, the video stream corresponding to the first viewing angle.

In a possible implementation, the first request information includes second indication information, the second indication information is used to indicate a second viewing angle, and the second viewing angle is used to indicate the server to deliver a video stream based on the second viewing angle; and the transceiver 1303 is configured to receive, from the server, a video stream corresponding to the second viewing angle.

In a possible implementation, the transceiver 1303 is further configured to send user preference data to the server, where the user preference data includes video stream viewing data of a user of the second terminal device.

In a possible implementation, the transceiver 1303 is configured to: send second request information to the server, where the second request information is used to request to switch a current viewing angle to a third viewing angle; and receive a video stream that is corresponding to the third viewing angle and that is sent by the server.

In a possible implementation, the transceiver 1303 is configured to receive a second video stream sent by the server, where the second video stream is obtained by collecting a live video of a first live streamer; and the processor 1302 is configured to display a floating window, where the floating window is used to display the second video stream.

For concepts, explanations, detailed descriptions, and other steps of the communications apparatus that are related to the technical solutions provided in embodiments of this application, refer to the descriptions of the content in the foregoing methods or other embodiments. Details are not described herein again.

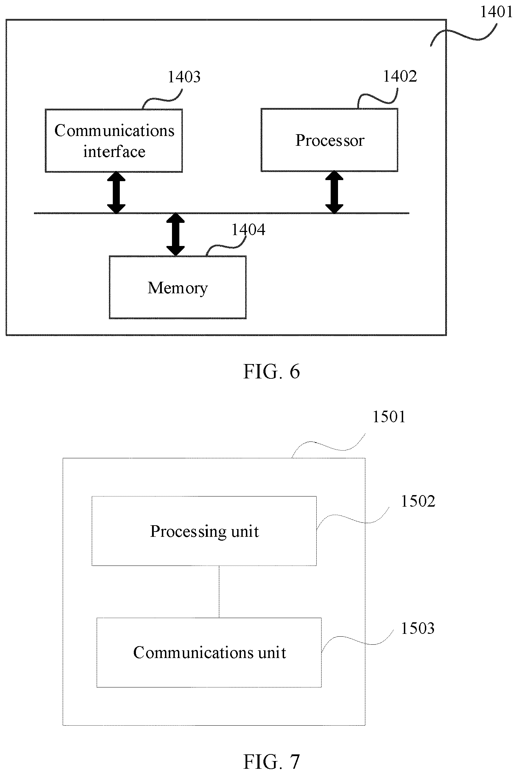

According to the foregoing methods, FIG. 6 is a schematic diagram of a structure of a communications apparatus according to an embodiment of this application. As shown in FIG. 6, the communications apparatus 1401 may include a communications interface 1403, a processor 1402, and a memory 1404. The communications interface 1403 is configured to input and/or output information. The processor 1402 is configured to execute a computer program or instructions, so that the communications apparatus 1401 implements the method of the first terminal device in the solution related to FIG. 3, or the communications apparatus 1401 implements the method of the second terminal device in the solution related to FIG. 3, or the communications apparatus 1401 implements the method of the server in the solution related to FIG. 3. In embodiments of this application, the communications interface 1403 may implement the solution implemented by the transceiver 1303 in FIG. 5, the processor 1402 may implement the solution implemented by the processor 1302 in FIG. 5, and the memory 1404 may implement the solution implemented by the memory 1304 in FIG. 5. Details are not described herein again.

Based on the foregoing embodiment and a same concept, FIG. 7 is a schematic diagram of a communications apparatus according to an embodiment of this application. As shown in FIG. 7, the communications apparatus 1501 may be a first terminal device, a second terminal device, or a third terminal device, or may be a chip or a circuit, for example, a chip or a circuit that may be disposed in the first terminal device, the second terminal device, or the third terminal device.

The communications apparatus may be corresponding to the first terminal device in the foregoing method. The communications apparatus may implement steps performed by the first terminal device in the method corresponding to any one or more items shown in FIG. 3. The communications apparatus may include a processing unit 1502 and a communications unit 1503. The communications unit 1503 is configured to: receive a first instruction, where the first instruction is used to instruct to start video livestream; the processing unit 1502 is configured to: enable a video livestream function based on the first instruction; and obtain live videos in all directions outside a first vehicle, to obtain at least one first video stream; and the transceiver 1303 is further configured to send the at least one first video stream to a server.

When the communications apparatus 1501 is corresponding to the second terminal device in the foregoing method, the processing unit 1502 is configured to: obtain first location information of a map element; and obtain first error information, where the first error information includes error information of positioning the first vehicle by using a positioning system of the first vehicle; and the communications unit 1503 is configured to send the first location information of the map element and the first error information to the second map update apparatus.

When the communications apparatus 1501 is corresponding to the foregoing server, the communications unit 1503 is configured to receive at least one first video stream from a first terminal device, where the first video stream is obtained by collecting a live video in any direction outside a first vehicle; and
the processing unit 1502 processes the at least one first video stream to obtain a panoramic video stream.

For concepts, explanations, detailed descriptions, and other steps of the communications apparatus that are related to the technical solutions provided in embodiments of this application, refer to the descriptions of the content in the foregoing methods or other embodiments. Details are not described herein again.

It may be understood that for functions of the units in the communications apparatus 1501, refer to implementation of a corresponding method embodiment. Details are not described herein again.

It should be understood that division into units of the communications apparatus is merely logical function division. During actual implementation, all or some of the units may be integrated into a physical entity, or may be physically separated. In embodiments of this application, the communications unit 1503 may be implemented by the transceiver 1303 in FIG. 5, and the processing unit 1502 may be implemented by the processor 1302 in FIG. 5.

According to the methods provided in embodiments of this application, this application further provides a computer program product. The computer program product includes computer program code or instructions. When the computer program code or the instruction is run on a computer, the computer is enabled to perform the method according to any one of the embodiments shown in FIG. 3.

According to the method provided in embodiments of this application, this application further provides a computer-readable storage medium. The computer-readable medium stores program code. When the program code is run on a computer, the computer is enabled to perform the method in any one of the embodiments shown in FIG. 3.

According to the method provided in embodiments of this application, this application further provides a chip system, where the chip system may include a processor. The processor is coupled to the memory, and may be used to execute the method of any one of the embodiments shown in FIG. 3. Optionally, the chip system further includes a memory. The memory is configured to store a computer program (which may also be referred to as code or instructions). The processor is configured to invoke and run the computer program from the memory, so that a device installed with the chip system executes the method of any one of the embodiments shown in FIG. 3.

According to the method provided in embodiments of this application, this application further provides a system, including the foregoing one or more vehicles and a map update apparatus on a server side. The map update apparatus is disposed in the vehicle.

All or some of the foregoing embodiments may be implemented by software, hardware, firmware, or any combination thereof. When software is used to implement the foregoing embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disc (solid state disc, SSD)), or the like.

It should be noted that a part of this patent application document includes copyright-protected content. The copyright owner reserves the copyright except copies are made for the patent documents or the recorded content of the patent documents in the Patent Office.

The second map update apparatus and the map update apparatus at the terminal device end in the foregoing apparatus embodiments are corresponding to the second map update apparatus or the map update apparatus at the terminal device end in the method embodiments, and a corresponding module or unit performs corresponding steps. For example, a communications unit (transceiver) performs a receiving or sending step in the method embodiments, and a processing unit (processor) may perform other steps except sending and receiving. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed by various computer-readable media that store various data structures. For example, the components may communicate in a local and/or remote process by using a signal having one or more data packets (for example, data from two components interacting with one another in a local system, a distributed system, and/or a network like the Internet interacting with another system by using the signal).

A person of ordinary skill in the art may be aware that, in combination with illustrative logical blocks (illustrative logical blocks) described in the embodiments disclosed in this specification and steps (steps), this application may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An in-vehicle livestream method, comprising:
receiving, by a server, at least one first video stream from a first terminal device, wherein the first video stream is obtained by collecting a live video in any direction outside a first vehicle; and
processing, by the server, the at least one first video stream to obtain a panoramic video stream.

2. The method according to claim 1, wherein the method further comprises:
receiving, by the server, first request information from a second terminal device, wherein the first request information is used to request the live video outside the first vehicle;
obtaining, by the server based on the first request information, a video stream corresponding to a target viewing angle in the panoramic video stream; and
sending, by the server, the video stream corresponding to the target viewing angle to the second terminal device.

3. The method according to claim 2, wherein the first request information comprises first indication information, and the first indication information is used to indicate the server to determine, based on content of the live video, the video stream corresponding to the first viewing angle.

4. The method according to claim 3, wherein the obtaining, by the server based on the first request information, a video stream corresponding to a target viewing angle in the panoramic video stream comprises:
performing, by the server, frame extraction on a video stream of each preset angle of view in the panoramic video stream based on the first indication information, to obtain at least one frame of picture corresponding to the preset angle of view;
matching, by the server, content of the at least one frame of picture with content of a reference picture stored in the server, to determine a user recognition degree corresponding to a preset angle of view that matches the content of the reference picture, wherein the content comprised in the reference picture is content with a user recognition degree greater than a first threshold;
determining, by the server, the first viewing angle based on the user recognition degree corresponding to the preset angle of view that matches the content of the reference picture; and
obtaining, by the server, the video stream corresponding to the first viewing angle in the panoramic video stream.

5. The method according to claim 3, wherein the method further comprises:
obtaining, by the server, user preference data, wherein the user preference data comprises content of a video stream with a user recognition degree greater than a second threshold and a category of content of each video stream.

6. The method according to claim 5, wherein the obtaining, by the server based on the first request information, a video stream corresponding to a target viewing angle in the panoramic video stream comprises:
classifying, by the server based on the first request information, a video stream of each preset angle of view in the panoramic video stream, to obtain a category of content of the video stream of each preset angle of view;
determining, by the server, a user recognition degree of the video stream of each preset angle of view based on the user preference data and the category of the content of the video stream of each preset angle of view;
determining, by the server, the first viewing angle based on the user recognition degree of the video stream of each preset angle of view; and
obtaining, by the server, the video stream corresponding to the first viewing angle in the panoramic video stream.

7. The method according to claim 3, wherein the method further comprises:
receiving, by the server, a second video stream from the first terminal device, wherein the second video stream is obtained by collecting a live video of a first live streamer.

8. The method according to claim 7, wherein the method comprises:
determining, by the server based on the second video stream, a posture feature of the first live streamer and a feature keyword in audio, wherein the posture feature comprises an expression and/or a body movement; and
the obtaining, by the server based on the first request information, a video stream corresponding to a target viewing angle in the panoramic video stream comprises:
determining, by the server from the panoramic video stream based on the first request information, a viewing angle corresponding to the posture feature of the first live streamer and the feature keyword in the audio as the first viewing angle; and
obtaining, by the server, the video stream corresponding to the first viewing angle in the panoramic video stream.

9. The method according to claim 3, wherein the method further comprises:
obtaining, by the server, current environment information, wherein the current environment information comprises at least one of the following:
current location information of the first vehicle, current weather information of a location of the first vehicle, and information about a point of interest POI within a preset range from the location of the first vehicle; and
the obtaining, by the server based on the first request information, a video stream corresponding to a target viewing angle in the panoramic video stream comprises:
determining, by the server from the panoramic video stream based on the first request information, a viewing angle related to the current environment information as the first viewing angle; and
obtaining, by the server, the video stream corresponding to the first viewing angle in the panoramic video stream.

10. The method according to claim 2, wherein the first request information comprises second indication information, the second indication information is used to indicate a second viewing angle, and the second viewing angle is used to indicate the server to deliver a video stream based on the second viewing angle.

11. The method according to claim 10, wherein the obtaining, by the server based on the first request information, a video stream corresponding to a target viewing angle in the panoramic video stream comprises:
obtaining, by the server based on the first request information, a video stream corresponding to the second viewing angle in the panoramic video stream; and
the sending, by the server, the video stream corresponding to the target viewing angle to the second terminal device comprises:
sending, by the server, the video stream corresponding to the second viewing angle to the second terminal device.

12. The method according to any one of claims 1 to 11, further comprising:
receiving, by the server, second request information sent by the second terminal device, wherein the second request information is used to request to switch a current viewing angle to a third viewing angle; and
sending, by the server, a video stream corresponding to the third viewing angle to the second terminal device.

13. The method according to claim 7 or 8, further comprising:
sending, by the server, the second video stream to the second terminal device.

14. The method according to any one of claims 1 to 13, further comprising:
receiving, by the server, a third video stream from the first terminal device, wherein the third video stream is obtained by collecting a live video of a second live streamer.

15. An in-vehicle livestream method, comprising:
receiving, by a first terminal device, a first instruction, wherein the first instruction is used to instruct to start video livestream;
enabling, by the first terminal device, a video livestream function based on the first instruction;
obtaining, by the first terminal device, live videos in all directions outside a first vehicle, to obtain at least one first video stream; and
sending, by the first terminal device, the at least one first video stream to a server.

16. The method according to claim 15, wherein after the enabling, by the first terminal device, a video livestream function based on the first instruction, the method further comprises:
obtaining, by the first terminal device, a live video of a first live streamer to obtain a second video stream; and
sending, by the first terminal device, the second video stream to the server.

17. The method according to claim 16, wherein after collecting, by the first terminal device by using a second video collection apparatus, the live video of the first live streamer, to obtain the second video stream, the method further comprises:
receiving, by the first terminal device, a second instruction, wherein the second instruction is used to instruct a livestream lens to switch from the first live streamer to a second live streamer;
adjusting, by the first terminal device, the livestream lens to face the second live streamer, and collecting a live video of the second live streamer, to obtain a third video stream; and
sending, by the first terminal device, the third video stream to the server.

18. An in-vehicle livestream method, comprising:
receiving, by a second terminal device, a third instruction, wherein the third instruction is used to instruct to obtain a live video of a first vehicle;
sending, by the second terminal device, first request information to a server, wherein the first request information is used to request the live video of the first vehicle; and
receiving, by the second terminal device from the server, a video stream corresponding to a target viewing angle.

19. The method according to claim 18, wherein the first request information comprises first indication information, and the first indication information is used to indicate the server to determine, based on content of the live video, a video stream corresponding to a first viewing angle; and
the receiving, by the second terminal device from the server, a video stream corresponding to a target viewing angle comprises:
receiving, by the second terminal device from the server, the video stream corresponding to the first viewing angle.

20. The method according to claim 18, wherein the first request information comprises second indication information, the second indication information is used to indicate a second viewing angle, and the second viewing angle is used to indicate the server to deliver a video stream based on the second viewing angle; and
the receiving, by the second terminal device from the server, a video stream corresponding to a target viewing angle comprises:
receiving, by the second terminal device from the server, a video stream corresponding to the second viewing angle.

21. The method according to any one of claims 18 to 20, wherein the method further comprises:
sending, by the second terminal device, user preference data to the server, wherein the user preference data comprises video stream viewing data of a user of the second terminal device.

22. The method according to any one of claims 18 to 21, wherein the method further comprises:
sending, by the second terminal device, second request information to the server, wherein the second request information is used to request to switch a current viewing angle to a third viewing angle; and
the receiving, by the second terminal device from the server, a video stream corresponding to a target viewing angle comprises:
receiving, by the second terminal device, a video stream that is corresponding to the third viewing angle and that is sent by the server.

23. The method according to any one of claims 18 to 22, wherein the method further comprises:
receiving, by the second terminal device, a second video stream sent by the server, wherein the second video stream is obtained by collecting a live video of a first live streamer; and
displaying, by the second terminal device, a floating window, wherein the floating window is used to display the second video stream.

24. A server, comprising a processor and a memory, wherein the memory is configured to store a computer executable instruction, and when the server runs, the processor executes the computer executable instruction in the memory to perform, by using a hardware resource in the server, an operation step of the method according to any one of claims 1 to 14.

25. A terminal device, comprising a processor and a memory, wherein the memory is configured to store a computer executable instruction, and when a server runs, the processor executes the computer executable instruction in the memory to perform, by using a hardware resource in the server, an operation step of the method according to any one of claims 15 to 17, or perform an operation step of the method according to any one of claims 18 to 23.

26. A server, comprising:
a communications interface, configured to input and/or output information; and
a processor, configured to execute a computer program, to perform the method according to any one of claims 1 to 14.

27. A terminal device, comprising:
a communications interface, configured to input and/or output information; and
a processor, configured to execute a computer program, so that the method according to any one of claims 15 to 17 is performed, or the method according to any one of claims 18 to 23 is performed.
